(19) Europäisches Patentamt / European Patent Office / Office européen des brevets

(11) **EP 1 946 502 B2**

(12) **NEW EUROPEAN PATENT SPECIFICATION**
After opposition procedure

(45) Date of publication and mention
of the opposition decision:
**13.09.2017   Bulletin 2017/37**

(45) Mention of the grant of the patent:
**29.01.2014   Bulletin 2014/05**

(21) Application number: **07764211.4**

(22) Date of filing: **12.07.2007**

(51) Int Cl.:
*H04L 12/891* (2013.01)   *H04L 12/825* (2013.01)

(86) International application number:
**PCT/CN2007/070283**

(87) International publication number:
**WO 2008/009235 (24.01.2008 Gazette 2008/04)**

(54) **METHOD FOR CONTROLLING CONGESTION**

VERFAHREN ZUR STEUERUNG VON VERKEHRSSTAUS

PROCÉDÉ DE COTNRÔLE D'ENCOMBREMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority:   **12.07.2006   US 807088 P**

(43) Date of publication of application:
**23.07.2008   Bulletin 2008/30**

(73) Proprietor: **Huawei Technologies Co., Ltd.**
**Longgang District**
**Shenzhen, Guangdong 518129 (CN)**

(72) Inventors:
• **YONG, Lucy**
  **Tulsa, Oklahoma 74137 (US)**
• **DUNBAR, Linda**
  **Plano, Texas 75025 (US)**

(74) Representative: **Thun, Clemens**
**Mitscherlich PartmbB**
**Patent- und Rechtsanwälte**
**Sonnenstraße 33**
**80331 München (DE)**

(56) References cited:
CN-A- 1 539 225          JP-A- 2004 088 219
US-A- 5 446 733          US-A- 6 046 980
US-A1- 2004 071 086

• KOLAROV A ET AL: "COMPARISON OF CONGESTION CONTROL SCHEMES FOR ABR SERVICE IN ATM LOCAL AREA NETWORKS" PROCEEDINGS OF THE GLOBAL TELECOMMUNICATIONS CONFERENCE (GLOBECOM). SAN FRANCISCO, NOV. 28 - DEC. 2, 1994; [PROCEEDINGS OF THE GLOBAL TELECOMMUNICATIONS CONFERENCE (GLOBECOM)], NEW YORK, IEEE, US, vol. 2 OF 03, 28 November 1994 (1994-11-28), pages 913-918, XP000488671 ISBN: 978-0-7803-1821-2

• GROSSMAN D B ED - INSTITUTE OF ELECTRICAL AND ELECTRONICS ENGINEERS: "An overview of frame relay technology" PROCEEDINGS OF THE ANNUAL INTERNATIONAL PHOENIX CONFERENCE ON COMPUTERS AND COMMUNICATIONS. SCOTTSDALE, MAR. 27 - 30, 1991; [PROCEEDINGS OF THE ANNUAL INTERNATIONAL PHOENIX CONFERENCE ON COMPUTERS AND COMMUNICATIONS], LOS ALAMITOS, IEEE COMP. SOC. PR, vol. CONF. 10, 27 March 1991 (1991-03-27), pages 539-545, XP010022432 ISBN: 978-0-8186-2133-8

• CHAPMAN J T: "Multimedia Traffic Engineering for HFC Networks" DATA SHEET CISCO SYSTEMS, XX, XX, 1 December 1999 (1999-12-01), pages 1-75, XP002212700

**Description**

**Field of the Invention**

The present invention relates generally to network technologies, and more particularly, to a method for controlling congestion.

**Background of the Invention**

Congestion control is a challenge for a non bandwidth dedicated transport network such as IP or Ethernet network. Congestion management is under discussion in IEEE 802.1 and IEEE 802.3. Typical solution today is when congestion happens at a port, drop all best effort packets first, then drop other packets to make it under congested, or send PAUSE message to its adjacent nodes to ask throttling down the traffic sending rate.

Ethernet switches have the capability to control the Committed Information Rate (CIR) and Excess Information Rate (EIR) on their ports. Provider guarantees a CIR for a user and allows user send more traffic rate than CIR up to EIR. If sending rate exceeds the CIR, some packet will be marked as best effort traffic, which will be transported if there is no congestion on the traverse paths. If there is congestion on the traverse paths, these packets will be dropped first.

There are some customers who want to take an advantage to send traffic up to EIR but want network tell them when a congestion happens in the network so they can reduce the sending rate. Those customers don't want network to simply discard their excess traffic when network is congested.

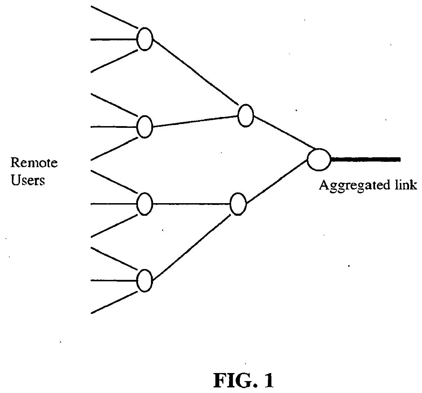

Figure 1 illustrates an aggregated access network. All user traffic is structured to go through the aggregated link at right. Each user port has CIR and EIR. When many users send traffic rate above CIR, it may cause the aggregated link congested. One way to control the congestion is to drop all best effort packets at an aggregated port.

Another way is to use PAUSE frame. If the PAUSE frames are used to signal to the remote end to slow down, the time delay can cause more packets being dropped on the congested links. When every remote node receives the PAUSE frame and reduce the traffic rate, the rate at the congestion point may go too low.

In addition, PAUSE frame does not coordinate among the remote nodes and how much traffic that each remote node should reduce to stop the congestion.

US 5 446 733A discloses a frame relay exchange apparatus which accommodates a plurality of subscriber lines and relay lines and transmits the frames received from these lines to a destination line, constituted so as to measure the amount of communication data for every PVC line along with an elapsed time and so as to calculate the limiting coefficient varying in accordance with the degree of the queue length of the transmission queue.

**Summary of the Invention**

Embodiments of the invention provide a congestion control mechanism and protocol to prevent congestion from occurring within a network. The congestion could be caused by too much traffic piping in from remote locations. The invented mechanism will allow network ingress ports to inform their adjacent users to reduce their output rate when there is potential congestion within the network.

A method for controlling congestion in an aggregated link is defined in claim 1.

This invention creates an intelligent congestion control mechanism and allows congestion control enabled by the network topology and bandwidth utilization. With the Link Utilization data, the invention enables proactive congestion control management. The mechanism can also differentiate congestion caused by excessive traffic and congestion caused by some link failure. This invention also provides flexibility for carrier to manage network compared to PAUSE mechanism or discarding best effort mechanism.

**Brief Description of the Drawings**

For a more complete understanding of the present disclosure and its advantages, reference is now made to the following description taken in conjunction with the accompanying drawings, in which like reference numerals represent like parts:

FIG. 1 illustrates an example of an aggregated Ethernet access network.

**Detailed Description of the Invention**

Embodiments of the present invention provide a mechanism and protocol among all remote sites and to control the traffic from all remote sites not to exceed the available bandwidth at the links where all remote traffic are aggregated (as shown in the diagram above). One part of the inventions is on algorithms to calculate maximum allowed rate at each affected ingress port based on aggregated link utilization and available bandwidth to prevent random packet drops as the result of congestion. The second part of the invention is on signaling and messages to notify ingress ports to control its ingress rate accordingly.

Static Closed Loop Feedback Control

This mechanism uses the internal link utilization and available bandwidth to calculate allowable ingress rate at each access node/port. For the topology shown in Figure 1, the aggregated link's bandwidth can be equally or proportionally divided among all access nodes/ports. There can be multiple policies to determine how the available bandwidth is divided by the affected ingress ports.

When some links fail within the network, such as some links fail when 802.3ad (link aggregation) is used, much smaller bandwidth is available on the aggregated link. Under this scenario, subscribers can have an option of being notified of reduced rate within the network to avoid random packet drops for traffic volume under their contract CIR. Of cause, network providers may choose not to notify their subscribers because they would rather pay the fine when their subscribers can't use their contract CIR than letting their customers aware of network failures.

Here is the description of how to make it work.

Assume each ingress port has its own CIR and EIR, which is represented by CIR1/CIR2.../CIRn and EIR1/EIR2/.../EIRn. The Congestion Controller is aware of each port's CIR and EIR information

If EIR1+EIR2+...+EIRn <= Aggregated Link Bandwidth (G), then each port just need to control all their traffic to be under its own EIR.

If EIR1+EIR2+..+EIRn > Aggregated Link Bandwidth, the each port is assigned an adjusted EIR (aEIR). The aEIR is calculated based on the policy defined.

There can be multiple policies on how to divide the available bandwidth on aggregated links among all remote access nodes/ports. This patent disclosure describes some of the policies and their associated algorithms.

For scenario where multiple links are having congestions, the congestion controller will calculate adjusted EIR for all those links and the smallest aEIR will be notified to the affected ingress ports.

One simple policy for aEIRi is to equally divide the extra bandwidth above the total CIR among all ingress ports, which can be represented by the following formula:

$$aEIRi = (\lambda\% * G\ (\text{Aggregated Link}) - (\textstyle\sum CIRi)) / n + CIRi$$

Wherein $\lambda\%$ is the threshold reserved for aggregated link to prevent it goes too close to the full bandwidth and $\lambda$ is a number between 1 to 100, n is the number of remote ingress user/VLAN ports and i is a constant between 1 to n.

A little more sophisticated policy could be allowing each ingress port having a fixed percentage above their pre-defined CIR rate, which can be represented by the following mathematic formula:

$$aEIRi = (( (\lambda\% * G\ (\text{Aggregated Link}) ) / (\textstyle\sum CIRi)) - 1 ) * CIRi$$

Dynamic Closed Loop Feedback Control

In this model, traffic going through the aggregated link is dynamic; meaning traffic traversing through the links is from different ports. In the diagram above, the traffic going towards tree leaf could come from variety of remote nodes which is not static. Therefore, this model requires a detection mechanism to detect which access ports are pumping traffic to this crowded link.

There are multiple ways to detect the access ports that are pumping traffic into the crowded link:

For Connection Oriented Data Path, i.e. packet routes or paths are pre-determined

When packet connections are pre-determined by signaling (as in the case of MPLS signaling) or manual setup, each link already have the information of network ingress ports which are pumping traffic to the links.

Under this scenario, the Static Closed Loop Feedback Control mechanism can be used.

It is true, not all packet connection will have traffic at any time. The Static Closed Loop Feedback Control calculates the adjusted EIR for all ports whose traffic traverse through the crowded link to prevent possible congestion and packet drops. It is possible that packets will not be dropped even when a port is using up more than is EIR because some other ports are not using up their designated EIR. However, this control mechanism to give subscriber option to control their output rate if they don't want any packets to be dropped. If a subscriber doesn't care about their packet drop, they can send more and the extra ones will be marked as "drop eligible" which can be dropped by network when congestion occurs.

Service Instance Based Detection

To achieve this level of detection, intermediate nodes are required to monitor Service Instances traversing through the link, such as keeping track of recent SVLAN/BVLAN or I-TAG (802.1ah case) for Ethernet traffic, VPN-ID for IP networks.

To some switches (Ethernet or IP), the mechanism to record current VLAN or VPN-ID already exists. For those switches, it is not extra work to monitor the recent flows traversing through the link.

This detection mechanism also requires an association table showing the relationship between the service instances and their associated access ports. For most provider network, this association table is pre-configured when service is sold to individual subscriber.

Blind Control of All Access Ports

For some network operators, simplicity is more important than fairness. The operator could choose to control all access ports when one of its link utilization surpasses the predefined threshold. This simple control doesn't require the network to monitor the service instances traversed on each link.

Ingress Port Address Based Detection

For some network operators, fairness is more important. Those operators may choose to control the rates among the exact access ports whose traffic traverses through the crowded links. To achieve this goal, the network operators have to monitor not only the service instances, but also Access Port Addresses. For the environment of IEEE 802.1ah, it might not be very difficult because there will only be a small number of Provider Backbone Addresses.

Once those access ports are detected, the congestion controller will calculate an adjusted EIR for those ports based on the link utilization and available bandwidth on the link. Again, different policies will dictate how the adjusted EIR for each affected ports are calculated. One policy example could be to control each affected ingress port under its current rate, or at least throttle down based on the current usage if the aggregated link goes beyond a predefined threshold.

In this model, when the crowded link utilization is crossing a predefined threshold, the Congestion Controller will query the ingress rate at all affected ports. The Controller will first calculate if the crowded link can handle the current ingress rate among the ports which are above their CIR assuming that the ports who is under their CIR will use up to their CIR. If answer is YES, then the Controller will notify all the affected ingress ports to control the incoming rate not to exceed the current level. If the answer is NO, then the controller will calculate an adjusted EIR for those ports which are currently using more than their CIR and notify them with the adjusted EIR. Here is just one example of the control policy. Other policy could be evenly dividing the available bandwidth among all the affected ingress ports.

Here is the formula to determine if the aggregated link can handle current usage assuming allowing the ports who currently use below their CIR to have full CIR:

$$TOTAL = \sum Ri + \sum CIRj,$$

Wherein Ri indicates the current usage of ports whose CurrentRate > CIRi and CIRj indicates the current usage of ports whose Current Rate < CIRi.

$$If\ TOTAL <= \lambda\% * G\ (Aggregated\ Link)$$

It means that the available bandwidth on the crowded link can handle the current usage, the Congestion Controller will notify all Ingress ports, whose current ingress rate is above their CIR, to use their current rate as their aEIR, i.e. not allowing extra ingress rate.

Else, the Congestion Controller will notify all ingress ports whose current rate is above their CIR to throttle down a percentage.

When the link utilization goes below the predefined threshold, Congestion Controller will send a message to all ingress ports to stop the rate control.

The same mechanism could also apply to the Ethernet Virtual LAN. Assuming multiple user forms an Ethernet Virtual LAN with the same S-VLAN. Network is able to monitor the performance data per S-VLAN. The controller can collect the actually user rate at each ingress per S-VLAN. Then the computation will be based on total allowed Virtual LAN bandwidth and actually total rate per S-VLAN.

This invention creates an intelligent congestion control mechanism and allows congestion control enabled by the network topology and bandwidth utilization. With the Link Utilization data, the invention enables proactive congestion control management. The mechanism can also differentiate congestion caused by excessive traffic and congestion caused by some link failure. This invention also provides flexibility for carrier to manage network compared to PAUSE mechanism or discarding best effort mechanism.

While a number of preferred embodiments of the invention have been shown and described herein, modifications thereof may be made by one skilled in the art without departing from the spirit and the teachings of the invention. The embodiments described herein are exemplary only and are not intended to be limiting. Many variations, combinations, and modifications of the invention disclosed herein are possible and are within the scope of the invention. Accordingly, the scope of protection is not limited by the description set out above, but is defined by the claims which follow, that scope including all equivalents of the subject matter of the claims.

## Claims

1. A method for controlling congestion in an aggregated link, **characterized by** comprising:

   analyzing data transfer rates from each of a plurality of affected remote sites;
   determining whether the sum of the data transfer rates from the affected remote sites exceeds a threshold;
   responsive to the determination that the sum of the data transfer rates from the affected remotes sites exceeds the threshold, accessing a congestion control policy;
   calculating a maximum allowed data transfer rate at each affected ingress port based on aggregated link utilization and available bandwidth to prevent random packet drops as the result of congestion; and
   notifying at least one of the affected remote sites to reduce the remote site's data transfer rate according to the congestion control policy.

2. The method of Claim 1, wherein determining whether the data transfer rates from the remotes sites exceed a threshold comprises:

   obtaining a sum of Excess Information Rates, EIRs, of the remote sites;
   determining whether the sum of EIRs is greater than the threshold.

3. The method of Claim 2, wherein the threshold comprises a bandwidth of the aggregated link.

4. The method of Claim 1, wherein determining whether the data transfer rates from the remotes sites exceed a threshold comprises:

   determining affected remote sites which are traversing traffic to the aggregated link;
   obtaining a sum of Committed Information Rates, CIRs, of the affect remote sites;
   determining whether the sum of CIRs is greater than the threshold.

5. The method of Claim 4, wherein the threshold comprises: $\lambda\% * G$, wherein the G is a bandwidth of the aggregated link and the $\lambda$ is a number between 1 to 100.

6. The method of Claim 4, wherein determining the affect remote sites comprises:

   determining the affected remote sites if packet connections are pre-determined by a signaling or manual setup;
   determining the affected remote sites by an intermediate node which monitors Service Instance; or
   determining all the remote sites as the affected remote sites if a link utilization of the aggregated link surpasses a predefined threshold.

7. The method of any Claims from Claim 2 to Claim 6, wherein the congestion control policy comprises:

   if the data transfer rates from the remotes sites do not exceed the threshold, the remote sites control their data transfer rates to be under the EIRs;

if the data transfer rates from the remotes sites exceed a threshold, adjusted EIRs, aEIRs, are calculated based on a defined policy.

8. The method of Claim 7, wherein the defined policy comprises:

$$aEIRi = (\lambda\% * G - (\sum CIRi)) / n + CIRi$$

wherein the G is a bandwidth of the aggregated link, the $\lambda$ is a number between 1 to 100, n is the number of the remote sites and i is a constant between 1 to n.

9. The method of Claim 7, wherein the defined policy comprises:

$$aEIRi = ((\ (\lambda\% * G) / \sum CIRi) - 1\ ) * CIRi$$

wherein the G is a bandwidth of the aggregated link, the $\lambda$ is a number between 0 to 100 and i is a constant between 1 to the number of the remote sites.

10. The method of Claim 4 or Claim 6, wherein the congestion control policy comprises:

if the sum of CIRs is less than or equal to the threshold, the remote sites whose current data transfer rates are above their CIRs control their data transfer rates to be under the data transfer rates;
if the sum of CIRs is greater than the threshold, the remote sites whose current data transfer rates are above their CIRs are given a calculated adjusted EIR.

11. The method of Claim 4 or Claim 6, wherein the congestion control policy comprises:

if the sum of CIRs is less than or equal to the threshold, the remote sites whose current data transfer rates are above their CIRs control their data transfer rates to be under the current data transfer rates;
if the sum of CIRs is greater than the threshold, the remote sites whose current data transfer rates are above their CIRs throttle down their data transfer rates.

12. The method of Claim 10 or 11, wherein the congestion control policy further comprises:

if the sum of CIRs which was greater than the threshold becomes less than or equal to the threshold, the remote sites whose current data transfer rates are above their CIRs stop controlling their data transfer rates.

**Patentansprüche**

1. Verfahren zum Steuern von Überlast in einer gebündelten Verbindungsleitung, **dadurch gekennzeichnet, dass** es Folgendes umfasst:

Analysieren der Datenübertragungsraten von jedem von mehreren betroffenen entfernten Standorten;
Bestimmen, ob die Summe der Datenübertragungsraten von den betroffenen entfernten Standorten einen Schwellenwert überschreitet;
in Reaktion auf die Bestimmung, dass die Summe der Datenübertragungsraten von den betroffenen entfernten Standorten den Schwellenwert überschreitet, Zugreifen auf eine Überlaststeuerstrategie;
Berechnen einer maximal erlaubten Datenübertragungsrate an jeder betroffenen Eingangsschnittstelle basierend auf der Nutzung der gebündelten Verbindungsleitung und der verfügbaren Bandbreite, um zufällige Paketverluste als das Ergebnis der Überlast zu vermeiden; und
Melden an wenigstens einen der betroffenen entfernten Standorte, die Datenübertragungsrate des entfernten Standorts gemäß der Überlaststeuerstrategie zu verringern.

2. Verfahren nach Anspruch 1, wobei das Bestimmen, ob die Datenübertragungsraten von den entfernten Standorten einen Schwellenwert überschreiten, Folgendes umfasst:

Erfassen einer Summe von überschrittenen Informationsraten, EIRs, der entfernten Standorte;
Bestimmen, ob die Summe der EIRs größer als der Schwellenwert ist.

3. Verfahren nach Anspruch 2, wobei der Schwellenwert eine Bandbreite der gebündelten Verbindungsleitung umfasst.

4. Verfahren nach Anspruch 1, wobei das Bestimmen, ob die Datenübertragungsraten von den entfernten Standorten einen Schwellenwert überschreiten, Folgendes umfasst:

Bestimmen von betroffenen entfernten Standorten, die Verkehr zu der gebündelten Verbindungsleitung durchleiten;
Erfassen einer Summe von garantierten Informationsraten, CIRs, der betroffenen entfernten Standorte;
Bestimmen, ob die Summe der CIRs größer als der Schwellenwert ist.

5. Verfahren nach Anspruch 4, wobei der Schwellenwert Folgendes umfasst: $\lambda\% * G$, wobei G eine Bandbreite der gebündelten Verbindungsleitung und $\lambda$ eine Zahl im Bereich von 1 bis 100 ist.

6. Verfahren nach Anspruch 4, wobei das Bestimmen der betroffenen entfernten Standorte Folgendes umfasst:

Bestimmen der betroffenen entfernten Standorte, wenn Paketverbindungen durch eine Signalisierung oder manuelle Einstellung vorbestimmt sind;
Bestimmen der betroffenen entfernten Standorte durch einen Zwischenknoten, der die Dienstinstanz überwacht; oder
Bestimmen aller entfernter Standorte als die betroffenen entfernten Standorte, wenn eine Verbindungsleitungsnutzung der gebündelten Verbindungsleitung einen vorgegebenen Schwellenwert übertrifft.

7. Verfahren nach einem der Ansprüche von Anspruch 2 bis Anspruch 6, wobei die Überlaststeuerstrategie Folgendes umfasst:

wenn die Datenübertragungsraten von den entfernten Standorten den Schwellenwert nicht überschreiten, Steuern der Datenübertragungsraten durch die entfernten Standorte so, dass sie unterhalb der EIRs sind;
wenn die Datenübertragungsraten von den entfernten Standorten einen Schwellenwert überschreiten, Berechnen eingestellter EIRs, aEIRs, basierend auf einer definierten Strategie.

8. Verfahren nach Anspruch 7, wobei die definierte Strategie Folgendes umfasst:

$$aEIRi = (\lambda\% * G - (\Sigma CIRi)) / n + CIRi$$

wobei G eine Bandbreite der gebündelten Verbindungsleitung, $\lambda$ eine Zahl im Bereich von 1 bis 100, n die Anzahl der entfernten Standorte und i eine Konstante im Bereich von 1 bis n ist.

9. Verfahren nach Anspruch 7, wobei die definierte Strategie Folgendes umfasst:

$$aEIRi = ((\ (\lambda\% * G) / \Sigma CIRi) - 1) * CIRi$$

wobei G eine Bandbreite der gebündelten Verbindungsleitung, $\lambda$ eine Zahl im Bereich von 0 bis 100 und i eine Konstante im Bereich von 1 bis zu der Anzahl der entfernten Standorte ist.

10. Verfahren nach Anspruch 4 oder Anspruch 6, wobei die Überlaststeuerstrategie Folgendes umfasst:

wenn die Summe der CIRs kleiner als der oder gleich dem Schwellenwert ist, Steuern der Datenübertragungsraten durch die entfernten Standorte, deren aktuelle Datenübertragungsraten oberhalb ihrer CIRs sind, so, dass sie unterhalb der Datenübertragungsraten sind;
wenn die Summe der CIRs größer als der Schwellenwert ist, Zuweisen zu den entfernten Standorten, deren aktuelle Datenübertragungsraten oberhalb ihrer CIRs sind, einer berechneten eingestellten EIR.

**11.** Verfahren nach Anspruch 4 oder Anspruch 6, wobei die Überlaststeuerstrategie Folgendes umfasst:

wenn die Summe der CIRs kleiner oder gleich dem Schwellenwert ist, Steuern der Datenübertragungsraten durch die entfernten Standorte, deren aktuelle Datenübertragungsraten oberhalb ihrer CIRs sind, so, dass sie unterhalb der aktuellen Datenübertragungsraten sind;
wenn die Summe der CIRs größer ist als der Schwellenwert, Drosseln der Datenübertragungsraten durch die entfernten Standorte, deren aktuelle Datenübertragungsraten oberhalb ihrer CIRs sind.

**12.** Verfahren nach Anspruch 10 oder 11, wobei die Überlaststeuerstrategie ferner Folgendes umfasst:

wenn die Summe der CIRs, die größer war als der Schwellenwert, kleiner oder gleich dem Schwellenwert wird, Anhalten des Steuerns der Datenübertragungsraten durch die entfernten Standorte, deren aktuelle Datenübertragungsraten oberhalb ihrer CIRs sind.

## Revendications

**1.** Procédé de commande de l'encombrement dans une liaison groupée, **caractérisé en ce qu'**il comprend :

l'analyse de débits de transfert de données depuis chaque site d'une pluralité de sites distants affectés ;
la détermination que la somme des débits de transfert de données depuis les sites distants affectés dépasse ou non un seuil ;
en réponse à la détermination que la somme des débits de transfert de données depuis les sites distants affectés dépasse le seuil, l'accès à une stratégie de commande d'encombrement ;
le calcul d'un débit de transfert de données maximum autorisé à chaque port d'entrée affecté en fonction de l'utilisation de la liaison groupée et de la largeur de bande disponible pour empêcher des pertes aléatoires de paquets suite à l'encombrement ; et
la notification à au moins l'un des sites distants affectés de réduire le débit de transfert de données du site distant en fonction de la stratégie de commande d'encombrement.

**2.** Procédé selon la revendication 1, dans lequel la détermination que les débits de transfert de données depuis les sites distants dépassent ou non un seuil comprend :

l'obtention d'une somme de Débits Maximaux Autorisés, EIR, des sites distants ;
la détermination que la somme des EIR est supérieure ou non au seuil.

**3.** Procédé selon la revendication 2, dans lequel le seuil comprend une largeur de bande de la liaison groupée.

**4.** Procédé selon la revendication 1, dans lequel la détermination que les débits de transfert de données depuis les sites distants dépassent ou non un seuil comprend :

la détermination des sites distants affectés qui acheminent un trafic vers la liaison groupée ;
l'obtention d'une somme de Débits Garantis, CIR, des sites distants affectés ;
la détermination que la somme des CIR est supérieure ou non au seuil.

**5.** Procédé selon la revendication 4, dans lequel le seuil comprend : $\lambda\% * G$,
où G est une largeur de bande de la liaison groupée et $\lambda$, est un nombre entre 1 et 100.

**6.** Procédé selon la revendication 4, dans lequel la détermination des sites distants affectés comprend :

la détermination des sites distants affectés si des connexions de paquets sont prédéterminées par une signalisation ou un réglage manuel ;
la détermination des sites distants affectés par un noeud intermédiaire qui surveille une Instance de Service ; ou
la détermination que tous les sites distants sont les sites distants affectés si une utilisation de liaison de la liaison groupée surpasse un seuil prédéfini.

**7.** Procédé selon l'une quelconque des revendications 2 à 6, dans lequel la stratégie de commande d'encombrement comprend :

si les débits de transfert de données depuis les sites distants ne dépassent pas le seuil, les sites distants commandent leurs débits de transfert de données pour qu'ils soient inférieurs à leurs EIR ;

si les débits de transfert de données depuis les sites distants dépassent un seuil, des EIR ajustés, aEIR, sont calculés en fonction d'une stratégie définie.

8. Procédé selon la revendication 7, dans lequel la stratégie définie comprend :

$$aEIRi = (\lambda\% * G - (\Sigma CIRi)) / n + CIRi$$

où G est une largeur de bande de la liaison groupée, $\lambda$ est un nombre entre 1 et 100, n est le nombre des sites distants et i est une constante entre 1 et n.

9. Procédé selon la revendication 7, dans lequel la stratégie définie comprend :

$$aEIRi = (( (\lambda\% * G) / \Sigma CIRi) - 1) * CIRi$$

où G est une largeur de bande de la liaison groupée, $\lambda$, est un nombre entre 0 et 100, et i est une constante entre 1 et le nombre des sites distants.

10. Procédé selon la revendication 4 ou la revendication 6, dans lequel la stratégie de commande d'encombrement comprend :

si la somme des CIR est inférieure ou égale au seuil, les sites distants dont les débits de transfert de données courants sont supérieurs à leurs CIR commandent leurs débits de transfert de données pour qu'ils soient inférieurs aux débits de transfert de données ;

si la somme des CIR est supérieure au seuil, les sites distants dont les débits de transfert de données courants sont supérieurs à leurs CIR reçoivent un EIR ajusté calculé.

11. Procédé selon la revendication 4 ou la revendication 6, dans lequel la stratégie de commande d'encombrement comprend :

si la somme des CIR est inférieure ou égale au seuil, les sites distants dont les débits de transfert de données courants sont supérieurs à leurs CIR commandent leurs débits de transfert de données pour qu'ils soient inférieurs aux débits de transfert de données courants ;

si la somme des CIR est supérieure au seuil, les sites distants dont les débits de transfert de données courants sont supérieurs à leurs CIR réduisent leurs débits de transfert de données.

12. Procédé selon la revendication 10 ou 11, dans lequel la stratégie de commande d'encombrement comprend en outre :

si la somme des CIR qui était supérieure au seuil devient inférieure ou égale au seuil,

les sites distants dont les débits de transfert de données courants sont supérieurs à leurs CIR arrêtent de commander leurs débits de transfert de données.

**FIG. 1**

**EP 1 946 502 B2**

## REFERENCES CITED IN THE DESCRIPTION

**Patent documents cited in the description**

- US 5446733 A